# EUROPEAN PATENT APPLICATION

(11) **EP 1 962 227 A2**
(43) Date of publication of application: **27.08.2008**
(21) Application number: 08100825.2
(22) Date of filing: 23.01.2008
(51) Int. Cl.: G06K 15/02, G06K 15/10, B41J 2/00

(54) **Data Transmission Apparatus and Data Processing Method**

(30) Priority: 23.02.2007 KR 20070018526
(71) Applicant: SAMSUNG ELECTRONICS CO., LTD., Suwon-City, Kyungki-do (KR)
(72) Inventor: PARK, Kyoung Sik, Seoul (KR)
(74) Representative: Walaski, Jan Filip

(57) **Abstract**

A data transmission apparatus, capable of transmitting data and address between a printer head controller and a head chip and a method of controlling the same. The data transmission apparatus includes an input terminal to receive combined address data and print data through a single terminal and to output the address data and the print data, a latch terminal to receive the combined address data and print data from the input terminal, to divide the combined address data and print data into address data and print data, to store the address data and the print data, and to output the address data and the print data, and an output terminal to receive the address data and the print data from the latch terminal and to output the address data and the print data.

## Description

The present invention relates generally to data transmission and processing, particularly for an inkjet printer, and more particularly to a data and address transmission apparatus of a printer head, capable of transmitting data and addresses between a printer head controller and a head chip and a method of controlling the same.

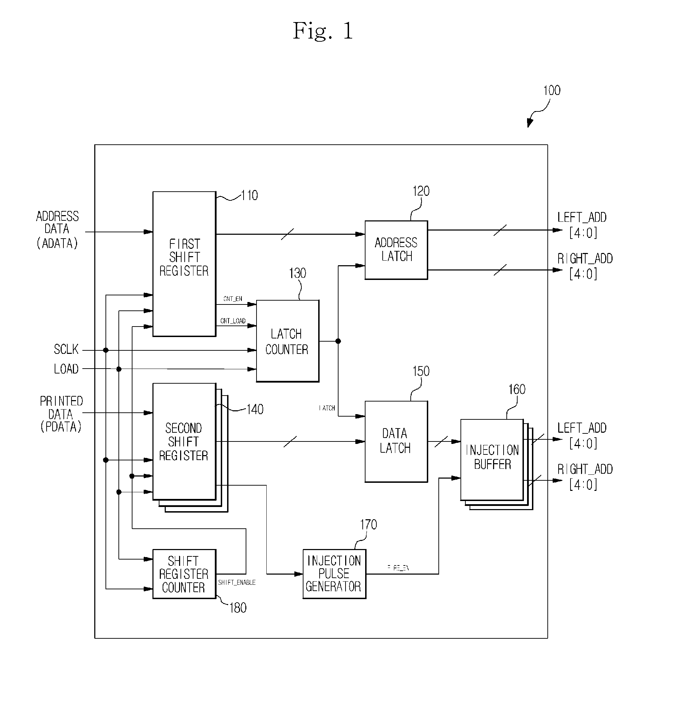

FIG. 1 is a block diagram of an apparatus 100 to drive a conventional printer head, or print head. The apparatus 100 includes a first shift register 110, an address latch 120, a latch counter 130, a second shift register 140, a data latch 150, an injection buffer 160, an injection pulse generator 170, and a shift register counter 180.

The first shift register 110 serially receives address data of nozzles discharging toner from a printer head controller (not shown), counts and stores the address data using the shift register counter 180, parallel converts the stored address data, latches the converted address data, and transmits the latched data to the address latch 120. The address data input from the first shift register 110 is decremented by the latch counter 130. When the value reaches 0, a latch signal is generated to output the input address data to the address latch 120. The address data, having undergone the above-described processes in a head chip, is output in the form of left address data Left_ADD[4:0] and right address data Right_ADD[4:0].

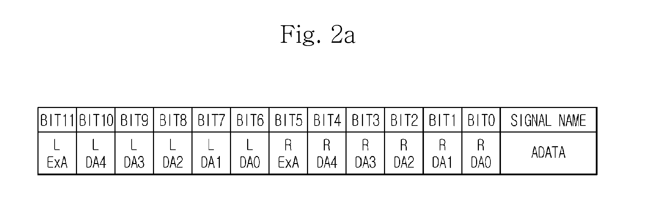

FIG. 2A shows an example of conventional address data. The address data is input in units of 12 bits and the address data in units of 12 bits are divided into address data to be actually discharged from the left and right sides, respectively. Bit[10:6] represented by L corresponds to the left address data and bit[4:0] corresponds to the right address data. Bit[5] and bit[11] correspond to bits for address expansion. The second shift register 140 serially receives print data to be printed onto a printable medium, parallel converts the serially received print data, latches the converted print data, transmits the latched print data to the data latch 150, decrements the print data input from the second shift register 140 by the latch counter 130, generates the latch signal when the value reaches 0, and outputs the input printed data to the data latch 150. The injection buffer 160 receives the print data output from the data latch 150. When an enable signal for injection is input from the injection pulse generator 170, the injection buffer 160 outputs the print data.

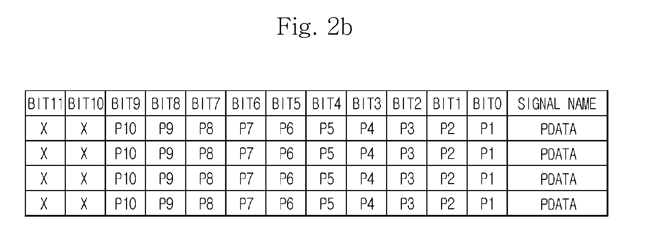

FIG. 2B shows an example of conventional print data. Print data relating to cyan (C), magenta (M), yellow (Y), and black (K) is input from the printer head controller (not shown). Of the 48 bits of input data, upper bits [11:10] are null data for buffering, and bits[9:0] are print data for actual discharge. The print data, having undergone the above-described processes in the head chip, is discharged in the form of left print data Left_Data[4:0] and right print data Right_Data[4:0].

However, in the conventional apparatus for driving the conventional printer head, since separate input pins are assigned to discharge the address data and the print data, interface specifications between the printer head controller and a head pin increase.

Aspects of the present invention provide an apparatus for transmitting data and addresses of a printer head and a method of controlling the same, in which the structure of the apparatus is improved to reduce specifications of interface between a printer head controller and a head chip, to reduce the size of a head chip, and to effectively control address data and printed data.

According to an aspect of the present invention, a data and address transmission apparatus of a printer head is provided. The apparatus comprises an input terminal to receive combined address data and print data through a single terminal and to output the combined address data and print data, a latch terminal to receive the combined address data and print data from the input terminal, to divide the combined address data and print data into address data and print data, to store the address data and the print data, and to output the address data and the print data, and an output terminal to receive the address data and the print data from the latch terminal and to output the address data and the print data so as to print an image corresponding to the print data onto a printable medium.

According to another aspect of the invention, the input terminal serially receives and stores the combined address data and the print data and outputs the combined address data and print data in parallel.

According to another aspect of the invention, the input terminal counts and stores the combined address data and print data so as to output the combined address data and print data in parallel.

According to another aspect of the invention, the latch terminal determines an initial 12 bits of the combined address data and print data to be the address data, and determine the remaining bits of the combined address data and print data to be the print data.

According to another aspect of the invention, the output terminal includes a first output unit to receive and store the address data and to output the stored address data and a second output unit to receives and store the print data and to output the print data.

According to another aspect of the invention, the second output unit includes a data latch to receive and store the print data and to output the print data, an injection pulse generator to generates an enable signal to output the print data, and an injection buffer to receives and store the print data output from the data latch and to output the print data when the enable signal is received from the injection pulse generator.

According to another aspect of the present invention, a method of controlling a data and address transmission apparatus of a printer head is provided. The method comprises receiving combined address data and print data corresponding to an image to be printed onto a printable medium via a single terminal; dividing the combined address data into address data and print data; storing the address data and the print data; and transmitting the address data and the print data to be printed onto the printable medium.

According to another aspect of the invention, the receiving of the combined address data and print comprises serially receiving the combined address data and print data. According to another aspect of the invention, the method further comprises converting the combined address data and print data into parallel combined address data and print data prior to dividing the combined address data and print data.

According to another aspect of the invention, the dividing of the combined address data and print data comprises determining an initial 12 bits of the combined address data and print data to be the address data, and determining remaining bits of the combined address data and print data to be the print data.

According to another aspect of the invention, the receiving of the address data and the print data includes receiving and storing the address data so as to transmit the stored address data, and receiving and storing the print data so as to transmit the stored printed data.

According to another aspect of the invention, the transmitting of the print data comprises transmitting the print data when an enable signal of 1 is input from an injection pulse generator.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a block diagram of an apparatus to drive a conventional printer head;
FIG. 2A illustrates an example of conventional address data;
FIG. 2B illustrates an example of conventional print data;
FIG. 3 is a block diagram of a data and address transmission apparatus of a printer head according to an embodiment of the present invention;
FIG. 4 illustrates an example of address data and print data according to an embodiment of the present invention; and
FIG. 5 is a flowchart illustrating processes of controlling the data and address transmission apparatus of the printer head according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

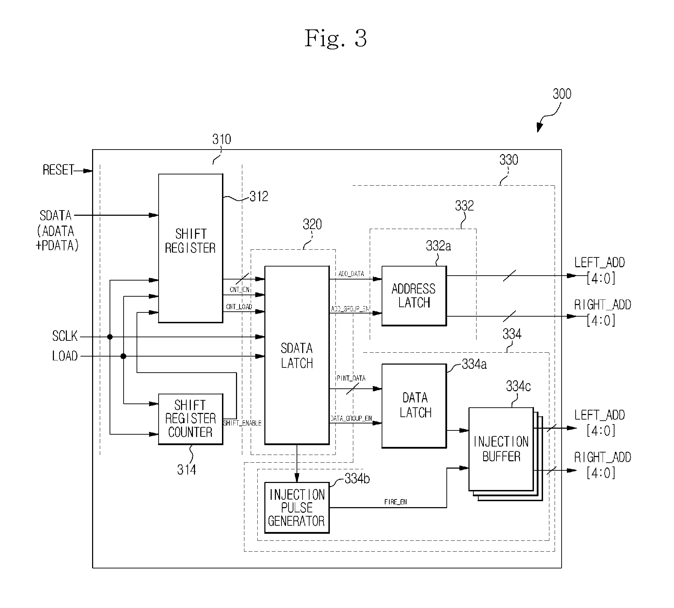

FIG. 3 is a block diagram of a data and address transmission apparatus 300 of a printer head according to an embodiment of the present invention. The data and address transmission apparatus 300 of the printer head includes an input terminal 310, a latch terminal 320, and an output terminal 330. According to other aspects of the present invention, the apparatus 300 may include additional and/or different units. Similarly, the functionality of two or more of the above units may be integrated into a single component. The apparatus 300 may be incorporated into an image forming apparatus separately from a print cartridge, and/or may be incorporated into a print head of a printer cartridge that is detachable from the printer/image forming apparatus.

The input terminal 310 receives address data ADATA and print data PDATA from a printer head controller (not shown) through a common (single) terminal. The input terminal 310 includes a shift register 312 and a shift register counter 314. The shift register 312 serially receives the address data ADATA and the print data PDATA through one input pin, stores the address data ADATA and the print data PDATA, and outputs the stored address data ADATA and print data PDATA in parallel.

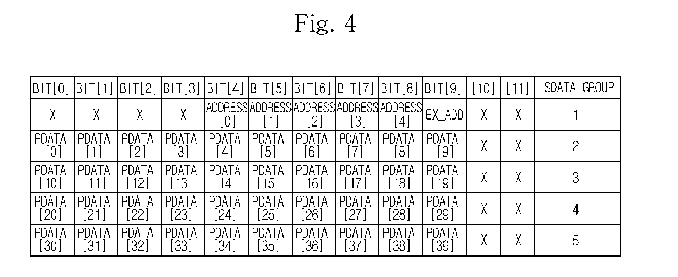

FIG. 4 shows an example of address data and print data according to an embodiment of the present invention. As shown in FIG. 4, the shift register 312 sequentially receives 12 bits of address data and 48 bits of print data. The 12 bits of address data includes 5 bits of actual address data and 2 bits of null data. The 48 bits of print data includes 40 bits of print data and 8 bits of null data. The shift register 312 receives the address data and print data based on a SCLK output from the head controller, shifts and counts (divides) the received address data and print data into units of 12 bits, and, when the address data and the print data are counted in units of 12 bits, transmits the address data and print data in parallel in units of 12 bits. The particular size of the units is not limiting; other aspects of the invention may employ other sizes. An enable signal output from the shift register counter 314 is received to count the address data and print data applied to the shift register 312.

As shown in FIG. 3, the latch terminal 320 receives the output address data and print data, divides and stores the received address data and print data, and outputs the stored address data and print data. The latch terminal 320 includes an SDATA latch. The SDATA latch divides the address data and print data (received in units of 12 bits) received from the shift register 312 into an address group and a print group, stores the address group and the print group, and outputs the stored address data and print data.

As shown in FIG. 4, after initially input data of 12 bits are converted in parallel among the address data and print data of 60 bits that are sequentially input from the printer head controller, the address data is designated as SDATA group 1 while passing through the SDATA latch to be recognized as address data. The print data is data of 48 bits sequentially input after the initially input data of 12 bits, and are designated as SDATA groups 2, 3, 4, and 5 to be recognized as print data to be printed onto the printable medium.

Bit[4:0] and bit[9:5] of the print data have the print data to be discharged onto the right and left sides of the head chip, respectively. For the address data, the values of the address data of bit[8:4] are applied to the values to be discharged on both the right and left sides. Upper bit[11:10] among the data of 60 bits function as null data in order to secure a buffering time between the respective SDATA groups. 4 bits of bit[3:0] of the SDATA group 1 have an unimportant value with no relation to an actual printing operation. As such, bit[3:0] are shown as null data. The particular arrangement of the bits is not limiting; other aspects of the invention may arrange the bits in a different fashion or may assign different values to the bits. The address data and the print data that are divided by the SDATA groups are output as final data for printing while passing through the output terminal 330.

The output terminal 330 receives the output address data and print data from the latch terminal 320 and outputs the address data and the print data for printing onto the printable medium. The output terminal 330 includes a first output unit 332 that receives, stores, and outputs the output address data and a second output unit 334 that receives, stores, and outputs the output print data.

The first output unit 332 includes an address latch 332a. The address latch 332a receives the address data output from the SDATA latch and latches the address data to be transmitted to the nozzles of the image forming apparatus when an enable signal of 1 for address groups is received from the SDATA latch to output the address data to the nozzles.

The second output unit 334 includes a data latch 334a, an injection pulse generator 334b, and an injection buffer 334c. The data latch 334a receives and stores the print data output from the latch terminal 320. The data latch 334a receives the print data output from the SDATA latch and latches the print data to be transmitted to the nozzles when the enable signal of 1 for print groups is received from the SDATA latch.

The injection pulse generator 334b generates an enable signal for outputting the print data. The injection buffer 334c receives and stores the print data output from the data latch 334a and outputs the stored print data when the enable signal is input from the injection pulse generator 334b. The injection buffer 334c receives and stores the print data output from the data latch 334a and performs logical AND on the stored print data and the enable signal of 1 input from the injection pulse generator 334b to output the print data to the nozzles.

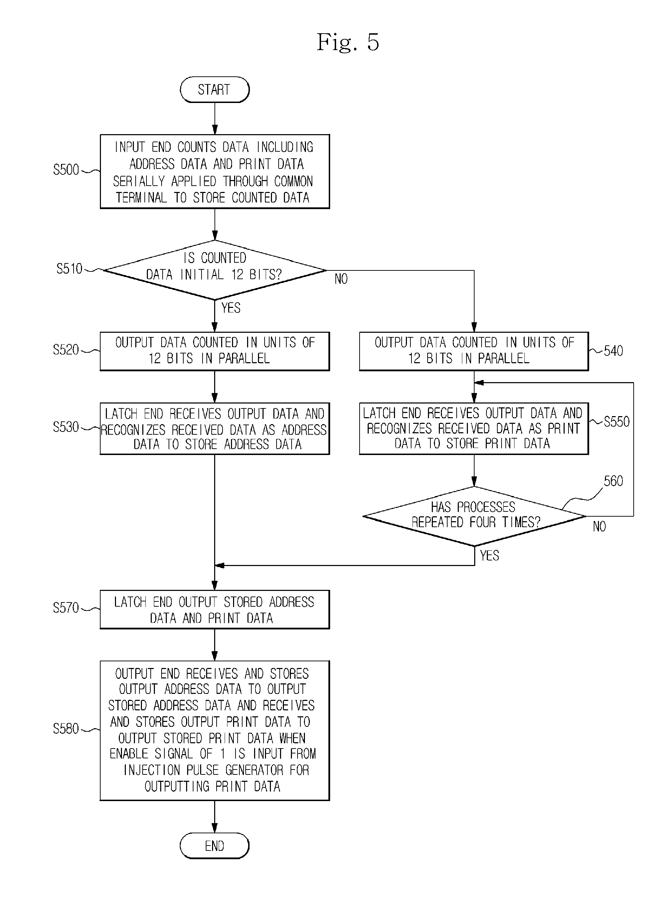

FIG. 5 is a flowchart illustrating processes of controlling the data and address transmission apparatus of the printer head according to an embodiment of the present invention. In operation S500, the input terminal 310 counts data including address data and print data serially applied through a common terminal to store the address data and the print data.

Whether the counted data is an initially input 12 bits is determined in operation S510. If the counted data is the initially input 12 bits, the data counted in units of 12 bits are output in parallel in operation S520. The latch terminal 320 receives the output data and recognizes the received data as the address data to store the address data in operation S530.

If the counted data is not the initially input 12 bits, the data counted in units of 12 bits are output in parallel in operation S540. The latch terminal 320 receives the output data and recognizes the received data as the print data to store the print data in operation S550. Whether the above processes have been repeated four times is determined in operation S560. If above processes have repeated four times, the stored address data and print data are output in operation S570. The above process may, according to other aspects of the invention, be repeated more or fewer times, depending on the size and/or format of the data, as well as when more or fewer colors are to be printed.

The above processes are repeated four times to store the print data for cyan (C), magenta (M), yellow (Y), and black (K). The output terminal 330 receives and stores the output address data to output the stored address data. The output print data is received and stored. The stored print data is output when an enable signal of 1 is input from the injection pulse generator 334b in operation S580.

As described above, in the data and address transmission apparatus of the printer head according to aspects of the present invention and the method of controlling the same, since the address data and the print data are serially transmitted through one input pin, it is possible to reduce specifications of interface between the head controller and the head chip. Therefore, it is possible to reduce the size of the head chip and to effectively control the address data and the print data.

Although a few embodiments of the present invention have been shown and described, it would be appreciated by those skilled in the art that changes may be made in this embodiment without departing from the principles of the invention, the scope of which is defined in the claims.

## Claims

1. A data transmission apparatus comprising:
an input terminal for receiving combined address and print data via a single terminal;
a latch terminal for dividing the combined address and print data into address data and print data; and
an output terminal for transmitting the address data and the print data for printing onto a printable medium.

2. The data transmission apparatus according to claim 1, wherein the input terminal is arranged to receive and store the combined address data and the print data serially and to output the combined address data and print data in parallel.

3. The data transmission apparatus according to claim 1 or 2, wherein the input terminal comprises:
a shift register to receive the combined address and print data, to divide the combined address and print data into a plurality of units, and to transmit the combined address and print data in parallel to the latch terminal as the plurality of units; and
a shift register counter to transmit an enable signal to control the dividing by the shift register.

4. The data transmission apparatus according to any one of the preceding claims, wherein the input terminal is arranged to count and store the combined address data and print data so as to output the combined address data and print data in parallel.

5. The data transmission apparatus according to any one of the preceding claims, wherein the latch terminal is arranged to determine an initial 12 bits of the combined address data and print data to be the address data, and to determine the remaining bits of the combined address data and print data to be the print data.

6. The data transmission apparatus according to any one of the preceding claims, wherein the output terminal comprises:
a first output unit to receive and store the address data and to output the stored address data; and
a second output unit to receive and store the print data and to output the stored print data.

7. The data transmission apparatus according to claim 6, wherein the second output unit comprises:
a data latch to receive and store the print data and to output the print data; an injection pulse generator to generate an enable signal to output the stored print data; and
an injection buffer to receive and store the print data output from the data latch and to output the print data when the enable signal is received from the injection pulse generator.

8. A method of processing data, the method comprising:
receiving combined address data and print data corresponding to an image to be printed onto a printable medium via a single terminal;
dividing the combined address data and print data into address data and print data; and
transmitting the address data and print data to be printed onto the printable medium.

9. The method of claim 8, comprising dividing the combined address and print data using a single latch, and storing the address data and the print data.

10. The method according to claim 8 or 9, wherein receiving the combined address data and print data comprises serially receiving the combined address data and print data.

11. The method according to claim 10, further comprising converting the combined address data and print data into parallel combined address data and print data prior to dividing the combined address data and print data.

12. The method according to any one of claims 8 to 11, wherein dividing of the combined address data and print data comprises:
determining an initial number of predetermined bits of the combined address data and print data to be the address data; and
determining remaining bits of the combined address data and print data to be the print data.

13. The method according to claim 12, wherein the initial number of predetermined bits of the combined address data and print data comprise 12 bits.

14. The method according to any one of claims 8 to 13, wherein the transmitting of the address data and the print data comprises:
receiving and storing the address data so as to transmit the stored address data; and
receiving and storing the print data so as to transmit the stored print data.

15. The method according to claim 14, wherein the transmitting of the print data comprises transmitting the print data when an enable signal is input from an injection pulse generator.

16. The method of any one of claims 8 to 15, wherein dividing the combined address data and print data into address data and print data comprises:
dividing the combined address data and print data into a plurality of units; and
classifying the plurality of units into address data and print data.

17. The method according to claim 16, wherein the classifying of the plurality of units comprises:
determining an initial unit of the plurality of units to be the address data; and
determining remaining units of the plurality of units to be the print data.

18. The method according to claim 16 or 17, wherein each of the plurality of units comprises 12 bits.

19. The method according to claim 16, 17 or 18, wherein the outputting of the address data and the print data comprises:
outputting the address data; and
outputting the print data when an enable signal is received.

20. The method according to any one of claims 16 to 19, comprising repeating the storage of the print data four times.

21. The method according to any one of claims 8 to 20, wherein the single terminal is a single pin.
